# EUROPEAN PATENT APPLICATION

(11) **EP 4 822 833 A1**
(43) Date of publication of application: **14.10.2026**
(21) Application number: 25907530.7
(22) Date of filing: 14.10.2025
(51) Int. Cl.: H01M 50/102, H01M 50/119, H01M 50/184, H01M 50/586, H01M 10/04, H01M 10/0562

(54) **BATTERY CELL AND BATTERY PACK INCLUDING SAME**

(30) Priority: 20.12.2024 KR 20240192310; 02.10.2025 KR 20250145194
(71) Applicant: LG Energy Solution, Ltd., Seoul 07335 (KR)
(72) Inventor: JEONG, Seyoung, Daejeon 34122 (KR); JUN, Youngjin, Daejeon 34122 (KR); KANG, Yonghee, Daejeon 34122 (KR)
(74) Representative: BCKIP Part mbB
(86) International application number: PCT/KR2025/016090
(87) International publication number: WO 2026/134576

(57) **Abstract**

A battery cell according to an embodiment of the present disclosure comprises: an electrode laminate formed by laminating a plurality of bipolar electrodes in which a negative electrode active material layer and a positive electrode active material layer are respectively coated on both surface of a metal current collector; a battery case that accommodates the electrode laminate; and an exterior member that surrounds a protruding portion extending outward from an outer peripheral surface of the battery case, wherein the exterior member presses the protruding portion in a thickness direction of the protruding portion.

## Description

### TECHNICAL FIELD

### Cross-Reference to Related Application(s)

This application claims priority to and the benefit of Korean Patent Application No. 10-2024-0192310, filed on December 20, 2024, and Korean Patent Application No. 10-2025-0145194, filed on October 2, 2025, the entire contents of which are incorporated herein by reference.

The present disclosure relates to a battery cell and a battery pack including the same, and more particularly, to a battery cell comprising a packaging structure comprising a battery case that accommodates an electrode laminate including a bipolar electrode; and an exterior member mounted along an outer peripheral surface thereof, and a battery pack including the same.

### BACKGROUND

Recently, as the application area of lithium secondary batteries has rapidly been extended not only to supply power for electronic devices such as electricity, electronics, communication, and computers, but also to power storage and supply for large-area devices such as automobiles and power storage systems, demand for secondary batteries that have high capacity, high output and high stability is increasing.

The electrode used in such secondary batteries may be classified into a monopolar electrode in which active materials having the same polarity are coated on both surfaces of the current collector, and a bipolar electrode in which active materials having different polarity are coated on both surfaces of the current collector.

A secondary battery utilizing monopolar electrodes has a connection portion for connecting the electrodes, which may lead to a decrease in output due to the electrical resistance of the connection portion. Further, in the case of a secondary battery utilizing monopolar electrodes, temperature rise due to Joule heating may cause various problems in terms of the safety of cells, and battery components for heat dissipation structures, thermal monitoring and wiring occupy a significant portion of space in the battery pack, which results in deterioration of space efficiency.

In contrast, since the secondary battery utilizing bipolar electrodes may laminate the electrodes without having a connection portion, it may minimize connection resistance of the electrodes. Consequently, in the case of the secondary battery utilizing bipolar electrodes, the output performance is very excellent, and the structure and components are simplified, leading to excellent space efficiency, so that the energy density and power density per unit volume can be considerably improved compared to conventional lithium-ion batteries.

As a result, secondary batteries utilizing bipolar electrodes having various structures are being developed.

### DETAILED DESCRIPTION OF THE INVENTION

### Technical Problem

It is an object of the present disclosure to provide a battery cell comprising a packaging structure comprising a battery case that accommodates an electrode laminate including a bipolar electrode; and an exterior member mounted along an outer peripheral surface thereof, and a battery pack including the same.

The objects of the present disclosure are not limited to the objects mentioned above, and additional other objects not described herein should be clearly understood by those skilled in the art from the following detailed description and the accompanying drawings.

### Technical Solution

According to an aspect of the present disclosure, provided is a battery cell comprising: an electrode laminate formed by laminating a plurality of bipolar electrodes having a configuration in which a negative electrode active material layer and a positive electrode active material layer are respectively coated on both surface of a metal current collector; a battery case that accommodates the electrode laminate; and an exterior member that surrounds a protruding portion extending outward from an outer peripheral surface of the battery case, wherein the exterior member presses the protruding portion in a thickness direction of the protruding portion.

In an embodiment, the battery case may comprise a lower metal that is located on a lower surface of the electrode laminate, and surrounds a lower part of the electrode laminate, and an upper metal that is located on an upper surface of the electrode laminate, and surrounds an upper part of the electrode laminate.

In an embodiment, the lower metal comprises a lower accommodating portion that accommodates the electrode laminate, and a lower protruding portion that protrudes toward the outside of the battery case from the outer peripheral surface of the lower accommodating portion, the upper metal comprises an upper accommodating portion that accommodates the electrode laminate, and an upper protruding portion that protrudes toward the outside of the battery case from the outer peripheral surface of the upper accommodating portion, and the protruding portion may be a portion where the lower protruding portion and the upper protruding portion face each other.

In an embodiment, the portions where the upper protruding portion and the lower protruding portion face each other may be sealed.

In an embodiment, the battery cell may further comprise a buffer member that extends along the lower protruding portion and the upper protruding portion.

In an embodiment, the exterior member may be formed with a first accommodating groove that extends along the longitudinal direction of the protruding portion, and the protruding portion may be fitted into the first accommodating groove of the exterior member.

In an embodiment, the battery cell comprises at least one fixing member that fixes the exterior member and the protruding portion to each other, wherein the fixing member may extend from the exterior member to the protruding portion.

In an embodiment, the at least one fixing member comprises a pair of fixing members that extend from the upper and lower surfaces of the exterior member to the protruding portion, wherein the at least one fixing member comprises a plurality of pairs of fixing members, and the plurality of pairs of fixing members may be disposed so as to be spaced apart from each other along the upper and lower surfaces of the exterior member.

In an embodiment, in the pair of fixing members, one fixing member may have a relatively smaller fastening torque than the other fixing member.

In an embodiment, the exterior member may be formed with at least one through hole into which a fixing member can be inserted in the exterior member.

In an embodiment, the exterior member comprises a pair of first exterior members each covering both side surfaces of the electrode laminate on the basis of the laminating direction of the electrode laminate, and a pair of second exterior members each covering the front and rear surfaces of the electrode laminate on the basis of the laminating direction of the electrode laminate, and the pair of first exterior members and the pair of second exterior members may be coupled to each other.

In an embodiment, the pair of first exterior members and the pair of second exterior members each comprises a fitting portion formed at one end and a second accommodating groove formed at the other end, on the basis of the longitudinal direction, and the fitting portion of the first exterior member may be fitted into the second accommodating groove of the second exterior member, and the fitting portion of the second exterior member may be fitted into the second accommodating groove of the first exterior member.

In an embodiment, the electrode laminate may be formed such that the bipolar electrodes and separators are laminated in sequence multiple times, and may further comprises an electrolyte that impregnates the electrode laminate inside the battery case.

In an embodiment, the electrode laminate may be formed such that the bipolar electrode and the solid electrolyte are laminated in sequence multiple times.

In an embodiment, the electrode laminate further comprises a pair of single-sided negative electrodes and a single-sided positive electrode, each disposed at the outermost side on the basis of the laminating direction, the single-sided negative electrode may have a single-sided negative electrode active material layer formed on one surface of the negative electrode current collector, and the single-sided positive electrode may have a single-sided positive electrode active material layer formed on one surface of the positive electrode current collector.

In an embodiment, the separator may be disposed between the single-sided negative electrode and single-sided positive electrode, and the bipolar electrode, respectively.

In an embodiment, the negative electrode current collector included in the single-sided negative electrode and the positive current collector included in the single-sided positive electrode may each abut against the battery case.

According to another aspect of the present disclosure, provided is a battery pack comprising the above-described battery cell.

### BRIEF DESCRIPTION OF THE DRAWINGS

FIG. 1 is a cross-sectional view of a battery cell according to an embodiment of the present disclosure.
FIG. 2 is a cross-sectional view of an electrode assembly included in the battery cell of FIG. 1.
FIG. 3 is a cross-sectional view showing that the upper and lower parts of a battery case are coupled to the electrode assembly of FIG. 2.
FIG. 4 is a cross-sectional view showing that an exterior member is coupled to both ends of the upper and lower parts of the battery case coupled to the electrode assembly of FIG. 3.
FIG. 5 is a cross-sectional view showing that a fixing member is coupled in the state that the electrode assembly, battery case, and exterior member of FIG. 4 are coupled.
FIG. 6 is a top view of the battery cell of FIG. 1.
FIG. 7 is a diagram showing an exterior member included in the battery cell of FIG. 1, showing a state in which a first exterior member and a second exterior member are coupled to each other.
FIGS. 8 to 10 are perspective views showing the first exterior member of FIG. 7.

### DETAILED DESCRIPTION OF THE EMBODIMENTS

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and a region are shown to be exaggerated.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

Now, a battery cell according to an embodiment of the present disclosure will be described.

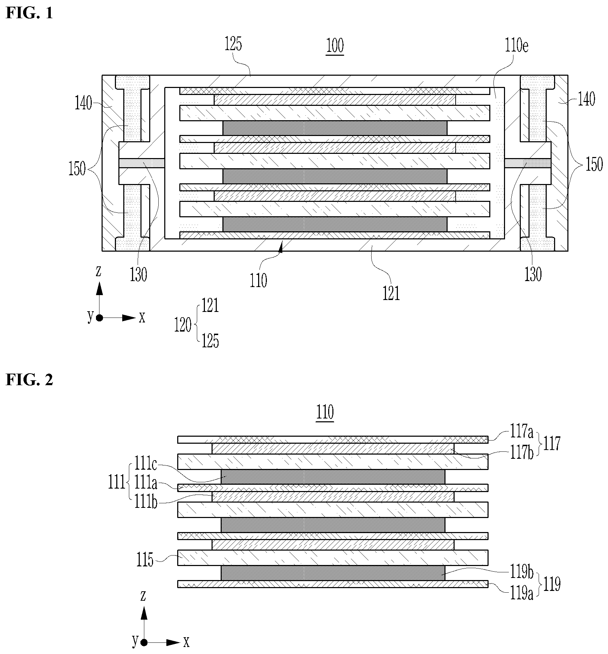

FIG. 1 is a cross-sectional view of a battery cell according to an embodiment of the present disclosure. FIG. 2 is a cross-sectional view of an electrode assembly included in the battery cell of FIG. 1.

Referring to FIGS. 1 and 2, a battery cell 100 according to an embodiment of the present disclosure comprises an electrode laminate 110 formed by laminating a plurality of bipolar electrodes 111 having a configuration in which a negative electrode active material layer 111b and a positive electrode active material layer 111c are respectively coated on both surface of a metal current collector 111a; and a battery case 120 that accommodates the electrode laminate 110.

More specifically, in the electrode laminate 110, the bipolar electrode 111 may have a configuration in which a negative electrode active material layer 111b and a positive electrode active material layer 111c are respectively coated on both surfaces of a metal current collector 111a, and in other words, it may be referred to as a unit cell. Here, the bipolar electrode 111 may refer to a structure in which the negative electrode active material layer 111b and the positive electrode active material layer 111c are connected in series to each other with the metal current collector 111a interposed between them. As an example, the bipolar electrode 111 may be configured such that a negative electrode active material layer 111b is coated on the lower surface of the metal current collector 111a, and a positive electrode active material layer 111c is coated on the upper surface of the metal current collector 111a, as shown in FIGS. 1 and 2. However, the arrangement of the negative electrode active material layer 111b and the positive electrode active material layer 111c is not limited thereto, and the opposite case may also be included in the present embodiment.

The metal current collector 111a is not particularly limited as long as it has high conductivity without causing a chemical change in the battery. As an example, the metal current collector 111a used herein may include copper, stainless steel, aluminum, nickel, titanium, fired carbon, or aluminum or stainless steel whose surface is treated with carbon, nickel, titanium, silver or the like, or an aluminum-cadmium alloy. More specifically, the metal current collector may be an Al current collector or a Cu current collector. The Al current collector or Cu current collector may be composed of Al or Cu, and is a concept that includes those further containing other metal materials to the extent of impurity content.

The metal current collector 111a may have a thickness of 3 µm or more and 500 µm or less regardless of its type. The metal current collector may have fine protrusions and depressions formed on a surface thereof to enhance the adhesion of the positive electrode active material layer and the negative electrode active material layer. As an example, the metal current collector 111a may be used in various shapes such as a film, a sheet, a foil, a net, a porous body, a foaming body, and a non-woven fabric structure.

The negative electrode active material layer 111b may include a negative electrode active material typically used in lithium secondary batteries, as well as the binder, conductive material, and other additives as described above.

The positive electrode active material layer 111c may include a positive electrode active material typically used in lithium secondary batteries, as well as the binder, conductive material, and other additives as described above.

Thereby, in the battery cell 100 according to the present embodiment, the bipolar electrodes 111 are connected in series by themselves, which offers the advantage that an electrical connection structure is structurally simplified compared to a conventional structure in which metal current collectors 111a are welded together to form electrode tabs.

In addition, as shown in FIGS. 1 and 2, the electrode laminate 110 may further include a pair of single-sided negative electrodes 117 and single-sided positive electrodes 119, which are respectively disposed at the outermost edge on the basis of the laminating direction. Here, the single-sided negative electrode 117 may be configured such that a single-sided negative electrode active material layer 117b is formed on one surface of the negative electrode current collector 117a, and the single-sided positive electrode 119 may be configured such that a single-sided positive electrode active material layer 119b is formed on one surface of the positive electrode current collector 119a. In addition, in the electrode laminate 110, a separator 115 may be disposed between the single-sided negative electrode 117 and the single-sided positive electrode 119, and the bipolar electrode 111.

As an example, as shown in FIGS. 1 and 2, a single-sided negative electrode 117 may be disposed on the outermost upper side of the electrode laminate 110, and a single-sided positive electrode 119 may be disposed on the outermost lower side of the electrode laminate 110. However, the arrangement of the single-sided negative electrode 117 and the single-sided positive electrode 119 is not limited thereto, and may be changed depending on the arrangement of the negative electrode active material layer 111b and the positive electrode active material layer 111c included in the bipolar electrode 111.

As shown in FIG. 1, the electrode laminate 110 may be configured such that a negative electrode current collector 117a included in a single-sided negative electrode 117 and a positive electrode current collector 119a included in a single-sided positive electrode 119 may each abut against the battery case 120. More specifically, the single-sided negative electrode 117 is disposed on the outermost upper side of the electrode laminate 110, and the negative electrode current collector 117a included in the single-sided negative electrode 117 may abut against the upper part of the battery case 120. Further, the single-sided positive electrode 119 is disposed on the outermost lower side of the electrode laminate 110, and the positive current collector 119a included in the single-sided positive electrode 119 may abut against the lower part of the battery case 120.

The negative electrode current collector 117a and the positive electrode current collector 119a are not particularly limited as long as they have high conductivity without causing a chemical change in the battery. As an example, the negative electrode current collector 117a and positive electrode current collector 119a used herein may include copper, stainless steel, aluminum, nickel, titanium, fired carbon, or aluminum or stainless steel whose surface is treated with carbon, nickel, titanium, silver or the like, or an aluminum-cadmium alloy. More specifically, the negative electrode current collector 117a may be a Cu current collector, and the positive electrode current collector 119a may be an Al current collector. Here, the Al current collector or Cu current collector may be composed of Al or Cu, and is a concept that includes those further containing other metal materials to the extent of impurity content.

The single-sided negative electrode active material layer 117b may include a negative electrode active material typically used in lithium secondary batteries, as well as the binder, conductive material and other additives as described above.

The single-sided positive electrode active material layer 119b may include a positive electrode active material typically used in lithium secondary batteries, as well as the binder, conductive material and other additives as described above.

Thereby, in the battery cell 100 according to the present embodiment, the single-sided negative electrode 117 and the single-sided positive electrode 119 are respectively disposed at the outermost side of the electrode laminate 110, and the negative electrode current collector 117a and the positive electrode current collector 119a may serve as electrode tabs, which offers the advantage that separate electrode tabs are not required. In addition, the whole surfaces of the negative electrode current collector 117a and positive electrode current collector 119a serve as paths for electron movement, which offers the advantage of being more effective in terms of resistance than conventional electrode tabs.

Referring to FIG. 1, in the battery cell 100 according to the present embodiment, the electrode laminate 110 is configured such that a plurality of bipolar electrodes 111 and separators 115 are laminated in sequence multiple times, and may further comprise an electrolyte 110e that impregnates the electrode laminate 110 inside the battery case 120. Here, the separator 115 may be used without particular limitation as long as it is a separator commonly used in a lithium secondary battery. Particularly, a separator having high moisture-retention ability for an electrolyte as well as low resistance to ion movement in the electrolyte is preferable.

Here, the electrolyte 110e may be a liquid electrolyte or a gel-type electrolyte typically used in lithium secondary batteries. The gel-type electrolyte comprises a lithium salt, a non-aqueous organic solvent, and at least one polymerizable compound selected from the group consisting of a polymerizable monomer, an oligomer, or a copolymer having a polymerizable unsaturated functional group, and at least a portion of the polymerizable unsaturated functional group may be cured.

In other words, the gel-type electrolyte may be one in which a gel electrolyte composition is cured by heat or light, wherein the gel electrolyte composition includes a lithium salt, a non-aqueous organic solvent, and at least one polymerizable compound selected from the group consisting of a polymerizable monomer, an oligomer, and a copolymer having a polymerizable unsaturated functional group. Here, the lithium salt may be used in the same or similar manner as that typically used in lithium secondary batteries. The lithium salt may be used as a medium for ion transfer inside the lithium battery.

As another example, the electrode laminate 110 according to the present embodiment has a structure in which the separator 115 is replaced with a solid electrolyte, unlike the electrode laminate 110 described above, and the electrode laminate 110 may be configured such that the bipolar electrodes 111 and the solid electrolytes are laminated in sequence multiple times. In this case, the electrolyte 110e may be omitted.

The solid electrolyte may be an organic solid electrolyte or an inorganic solid electrolyte. Examples of the organic solid electrolytes used herein include a polyethylene derivative, a polyethylene oxide derivative, a polypropylene oxide derivative, a phosphate ester polymer, a poly agitation lysine, a polyester sulfide, a polyvinyl alcohol, a polyvinylidene fluoride, a polymer containing an ionic dissociation group, or the like.

The inorganic solid electrolyte may be, for example, a nitride, halide or sulfate of Li, a sulfide-based solid electrolyte, or an oxide-based solid electrolyte. The inorganic solid electrolyte may be, for example, a nitride, halide or sulfide of Li such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, or Li₃PO₄-Li₂S-SiS₂, or may be a sulfide-based solid electrolyte or an oxide-based solid electrolyte.

The sulfide-based solid electrolyte may include Li₂S-P₂S₅-based (Li₇P₃S₁₁, Li₃PS₄, Li₈P₂S₉, etc.), Li₂S-SiS₂, LiI-Li₂S-SiS₂, LiI-Li₂S-P₂S₅, LiI-LiBr-Li₂S-P₂S₅, Li₂S-P₂S₅ -GeS₂ (Li₁₃GeP₃S₁₆, Li₁₀GeP₂S₁₂, etc.), LiI-Li₂S-P₂O₅, LiI-Li₃PO₄ -P₂S₅, Li₇₋ₓPS₆₋ₓClₓ, etc., or combinations thereof, but are not limited thereto.

The oxide-based solid electrolyte may include one or two or more selected from the group consisting of LLTO-based compounds, Li₆La₂CaTa₂O₁₂, Li₆La₂ANb₂O₁₂ (where A is Ca or Sr), Li₂Nd₃TeS_{b}O₁₂, Li₃BO_{2.5}N_{0.5}, Li₉SiAlO₈, LAGP-based compounds, LATP-based compounds, Li₁₊ₓTi₂₋ₓAlₓSi_{y}(PO₄)_{3-y} (where 0≤x≤1, 0≤y≤1), LiAlₓZr₂₋ₓ(PO₄)₃ (where 0≤x≤1), LiTiₓZr₂₋ₓ(PO₄)₃ (where 0≤x≤1), LISICON-based compounds, LIPON-based compounds, perovskite-based compounds, NASICON-based compounds, LLZO-based compounds, and LLZMO-based compounds.

Thereby, in the battery cell 100 according to the present embodiment, since the electrolyte 110e includes a gel or solid-type electrolyte, the fluidity of the electrolyte 110e can be minimized, and an ionic short between bipolar electrodes 111 or an electrical short between metal current collectors 111a caused by the fluidity of the electrolyte 110e can be effectively prevented.

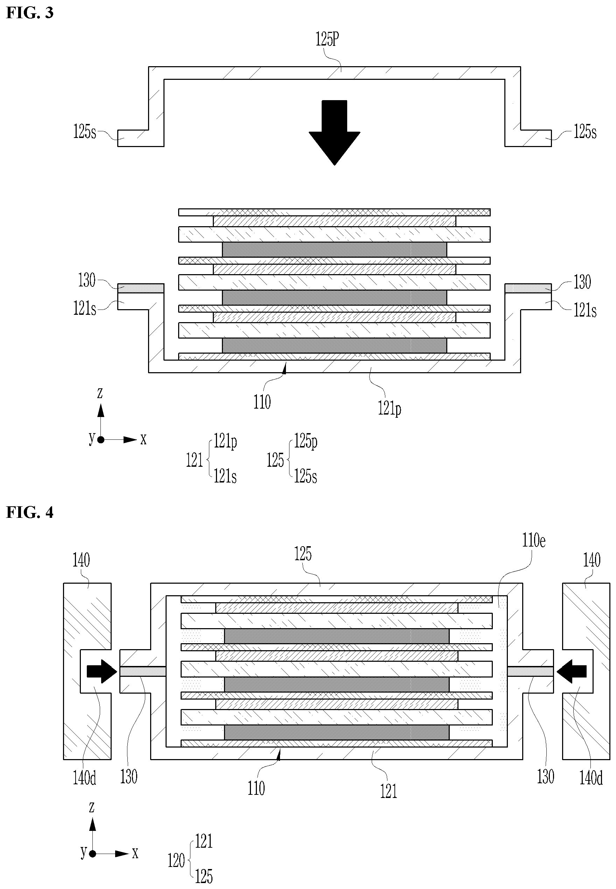

FIG. 3 is a cross-sectional view showing that the upper and lower parts of a battery case are coupled to the electrode assembly of FIG. 2.

Referring to FIGS. 1 and 3, in the battery cell 100 according to the present embodiment, the battery case 120 may include a lower metal 121 that is located on a lower surface of the electrode laminate 110, and surrounds a lower part of the electrode laminate 110, and an upper metal 125 that is located on an upper surface of the electrode laminate 110, and surrounds an upper part of the electrode laminate 110. As an example, as shown in FIG. 3, the battery cell 100 according to the present embodiment may have a structure in which an upper metal 125 is assembled on the upper part of an electrode laminate 110 in a state where the electrode laminate 110 is accommodated in a lower metal 121.

In the electrode laminate 110, the negative electrode current collector 117a included in the single-sided negative electrode 117 and the positive electrode current collector 119a included in the single-sided positive electrode 119 may abut against the lower metal 121 and upper metal 125 included in the battery case 20, respectively. As an example, as shown in FIG. 1, in the electrode laminate 110, the negative electrode current collector 117a included in the single-sided negative electrode 117 may abut against the upper metal 125, and the positive electrode current collector 119a included in the single-sided positive electrode 119 may abut against the lower metal 121.

Thereby, in the battery cell 100 according to the present embodiment, the electrode laminate 110 and the battery case 120 can be connected in series by themselves, which offers the advantage that a separate electrical connection structure is not required.

As an example, the lower metal 121 and upper metal 125 are not particularly limited as long as they are metal materials having high conductivity without causing a chemical change in the battery. As an example, the lower metal 121 and upper metal 125 may be made of aluminum, SUS (Steel Use Stainless), or other materials. Further, regardless of the type, the lower metal 121 and upper metal 125 may have a thickness of 0.1 mm (0.1T) or more and 0.3 mm (0.3T) or less in terms of the manufacturing process and cost.

Referring to FIGS. 1 and 3, in the battery case 120, the lower metal 121 comprises a lower accommodating portion 121p that may accommodate the electrode laminate 110, and a lower protruding portion 121s that protrudes outward from the outer peripheral surface of the lower accommodating portion 121p toward the outside of the battery case 120, and the upper metal 125 may comprise an upper accommodating portion 125p that may accommodate the electrode laminate 110, and an upper protruding portion 125s protruding toward the outside of the battery case 120 from the outer peripheral surface of the upper accommodating portion 125p.

Here, the protruding portions 121s, 125s may be a portion where the lower protruding portion 125 and the upper protruding portion 125s face each other. In other words, the protruding portions 121s, 125s are part of the battery case 120, and may be formed by sealing the portion where the lower protruding portion 121s and the upper protruding portion 125s face each other. At this time, in a state where the lower protruding portion 121s and the upper protruding portion 125s are in contact with each other, as a prescribed temperature and pressure are applied thereto, the space between the lower protruding portion 121s and the upper protruding portion 125s may be hermetically sealed from the external environment of the battery case 120.

However, the shape of the battery case 120 included in the battery cell 100 according to the present embodiment is not limited thereto, and various other shapes of the battery case 120 can be applied. As an example, unlike those shown in FIGS. 1 and 3, the battery case 120 may have a configuration in which the upper accommodating portion 125p of the upper metal 125 is omitted, and a structure in which the upper metal 125 in the form of a flat plate covers the lower metal 121 may also be included in the present embodiment.

As an example, as shown in FIG. 3, the battery cell 100 according to the present embodiment may be configured such that the electrode laminate 110 is accommodated in the lower accommodating portion 121p of the lower metal 121 in a state where a buffer member 130 is disposed on the lower protruding portion 121s of the lower metal 121. Subsequently, the upper metal 125 may be assembled on an upper part of the electrode laminate 110, and the upper protruding portion 125s may be in contact with the buffer member 130.

The battery cell 100 according to the present embodiment may further include a buffer member 130 extending along between the lower protruding portion 121s of the lower metal 121 and the upper protruding portion 125s of the upper metal 125. Here, the buffer member 130 is preferably in the form of a pad that can cover the entire area between the lower protruding portion 121s and the upper protruding portion 125s.

The buffer member 130 is not particularly limited as long as it is made of a material having elasticity so as to allow a certain degree of compression in the process of coupling the exterior member 140 (described below) even while ensuring insulation performance between the lower protruding portion121s of the lower metal 121 and the upper protruding portion 125s of the upper metal 125. As an example, the buffer member 130 may be a silicone pad, a polymer elastic pad, or a porous pad such as a non-woven fabric.

Thereby, in the battery cell 100 according to the present embodiment, as the buffer member 130 is further disposed between the lower protruding portion 121s and the upper protruding portion 125s, this offers the advantage of securing sufficient insulation performance between the lower metal 121 and upper metal 125, and also enabling compression during the process of coupling the exterior member 140 described below, thereby allowing the upper and lower parts of the electrode laminate 110 to be pressed with a prescribed pressure.

In this manner, the battery cell 100 according to the present embodiment has the advantage that as a prescribed pressure is applied to the upper and lower parts of the electrode laminate 110, the contact between the components of the electrode laminate 110 can be stably maintained when the electrode laminate 110 contracts/expands due to charging/discharging of the battery cell 100.

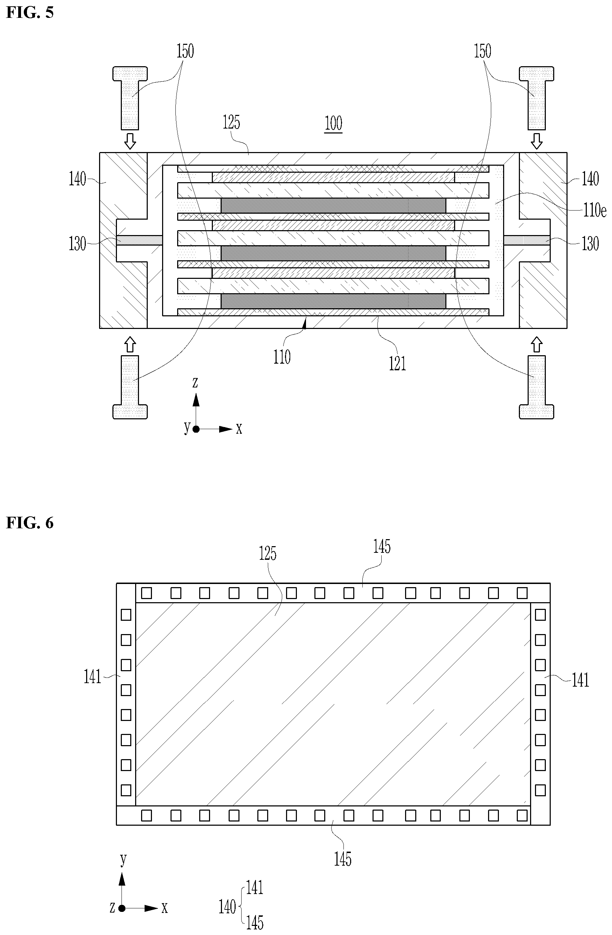

FIG. 4 is a cross-sectional view showing that an exterior member is coupled to both ends of the upper and lower parts of the battery case coupled to the electrode assembly of FIG. 3. FIG. 5 is a cross-sectional view showing that a fixing member is coupled in the state that the electrode assembly, battery case, and exterior member of FIG. 4 are coupled.

Referring to FIGS. 1 and 4, the battery cell 100 according to the present embodiment includes an exterior member 140 that surrounds the protruding portions 121s, 125s extending toward the outside of the battery case 120 from the outer peripheral surface of the battery case 120. Here, the exterior member 140 can press the protruding portions 121s, 125s in the thickness direction (z-axis direction) of the protruding portions 121s, 125s.

More specifically, in the battery cell 100 according to the present embodiment, the inner surface of the exterior member 140 may surround the outer surface of the protruding portions 121s, 125s. In other words, the protruding portions 121s, 125s may be inserted into the inner surface of the exterior member 140. Here, the exterior member 140 may have a structure that surrounds the whole of the protruding portions 121s, 125s formed on the outer peripheral surface of the battery case 120. In addition, the inner surface of the exterior member 140 may be in close contact with the outer surface of the accommodating portions 121p, 125p of the battery case 120.

As an example, the exterior member 140 is formed with a first accommodating groove 140d extending along the longitudinal direction of the protruding portions 121s, 125s, and the protruding portions 121s, 125s may be fitted into the first accommodating groove 140d of the exterior member 140. Here, the first accommodating groove 140d may refer to a portion that is recessed from the outer surface of the exterior member 140 toward the center of the exterior member 140.

The first accommodating groove 140d may be formed to have a length and thickness equal to or greater than the protruding portions 121s, 125s. Here, if a buffer member 130 is further inserted between the lower protruding portion 121s and the upper protruding portion 125s, the first accommodating groove 140d may be formed to have a length and thickness equal to or greater than the protruding portions 121s, 125s and the buffer member 130.

More specifically, in the battery cell 100 according to the present embodiment, the first accommodating groove 140d and the protruding portions 121s, 125s included in the exterior member 140 can be tightly coupled to each other. In other words, it is preferable that the size of the recess of the first accommodating groove included in the exterior member 140 is the same as the size of the protrusion of the protruding portions 121s, 125s.

It may be preferable that the length by which the first accommodating groove 140d included in the exterior member 140 is recessed in the direction opposite to the direction toward the protruding portions 121s, 125s is the same as the length by which the protruding portions 121s, 125s protrude in the direction toward the first accommodating groove 140d.

The height of the first accommodating groove 140d included in the exterior member 140 may preferably be equal to or greater than the thickness of the protruding portions 121s, 125s. Here, the thickness of the protruding portions 121s, 125s may be the sum of the thicknesses of the lower protruding portion 121s and the upper protruding portion 125s. If a buffer member 130 is further inserted between the lower protruding portion 121s and the upper protruding portion 125s, the thickness of the protruding portions 121s, 125s may be the sum of the thickness of the lower protruding portion 121s, the thickness of the upper protruding portion 125s, and the thickness of the buffer member 130.

Although not shown in FIGS. 1 and 4, an adhesive layer may be further formed between the first accommodating groove 140d and the protruding portions 121s, 125s included in the exterior member 140. As an example, the adhesive layer may be formed of a polymer adhesive such as polyvinylidene fluoride (PVDF), epoxy-based, polyol-based, or acrylate-based, or a hot melt adhesive such as polypropylene (PP), polyethylene (PE), or polyolefin-based.

As such, the battery cell 100 according to the present embodiment has the advantage that an adhesive layer is further formed between the first accommodating groove 140d included in the exterior member 140 and the protruding portions 121s, 125s, so that the space between the first accommodating groove 140d and the protruding portions 121s, 125s can be more hermetically sealed, while the electrode laminate 110 can be fixed to the exterior member 140 more stably.

The exterior member 140 may be made of any type of polymer, preferably a polymer having excellent thermal stability and mechanical strength. As an example, the exterior member 140 can be made of a polymer material such as high-density polyethylene (HDPE), polypropylene (PP), or polyethylene terephthalate (PET). As another example, an additional coating layer, such as a moisture-proof material, may be formed on the outer surface of the exterior member 140.

Thereby, in the battery cell 100 according to the present embodiment, the exterior member 140 fixes the lower protruding portion 121s and the upper protruding portion 125s, so that the lower metal 121 and the upper metal 125 can be stably fixed to each other. In other words, this offers the advantage of vertically pressing the electrode laminate and thus stably maintaining the contact between the components of the electrode laminate even during charging and discharging.

In addition, the exterior member 140 may prevent the lower protruding portion 121s and the upper protruding portion 125s from being exposed to the outside, while hermetically sealing between the lower protruding portion 121s and the upper protruding portion 125s. This makes it easy to handle the battery cell during processing, and also effectively prevents moisture and other foreign matter from penetrating into the interior of the battery cell 100 from the outside.

Referring to FIGS. 1 and 5, the battery cell 100 according to the present embodiment further includes at least one fixing member 150 that fixes the exterior member 140 and the protruding portions 121s, 125s to each other. More specifically, the fixing member 150 may extend from the exterior member 140 to the protruding portions 121s, 125s. In other words, the fixing member 140 may extend from the exterior member 140 to the first accommodating groove 140d. That is, the fixing member 150 is inserted into the exterior member 140, and may have a length sufficient to press and/or fix the protruding portions 121s, 125s inserted into the first accommodating groove 140d.

The fixing member 150 may be made of an insulating material to prevent short circuits. As an example, the fixing member 150 may be a bolt made of a plastic material, or a bolt made of a metal material including a tube in the form of an externally insulated hose.

As an example, as shown in FIGS. 1 and 5, at least one fixing member 150 may include a pair of fixing members 150 that extend from the upper and lower surfaces of the exterior member 140 to the protruding portions 121s, 125s. In other words, at least one fixing member 150 may include a pair of fixing members 150 that extend from the upper and lower surfaces of the exterior member 140 to the first accommodating groove 140d. Furthermore, at least one fixing member 150 may include a plurality of pairs of fixing members 150, and the plurality of pairs of fixing members 150 may be disposed so as to be spaced apart from each other along the upper and lower surfaces of the exterior member 140.

As an example, in a pair of fixing members 150 extending from the upper and lower surfaces of the exterior member 140 to the protruding portions 121s, 125s, one fixing member 150 may be coupled to the exterior member 140 so that the fastening torque is relatively lower than that of the other fixing member 150. In this way, the portion of the exterior member 140 where the fixing member 150 having a relatively lower fastening torque is located can guide gas and/or flames generated inside the battery cell 100 in the event of an abnormal phenomenon such as thermal runaway to be discharged.

As a result, in the battery cell 100 according to the present embodiment, the exterior member 140 can more stably fix the lower protruding portion 121s and the upper protruding portion 125s via the fixing member 150, thereby firmly fixing between the lower metal 121 and the upper metal 125 to each other. That is, this offers the advantage of pressing the electrode laminate in the vertical direction and thus more stably maintaining the contact between the components of the electrode laminate even during charge and discharge.

In addition, the exterior member 140 effectively hermetically seals between the lower protruding portion 121s and the upper protruding portion 125s via the fixing member 150, and also may prevent the lower protruding portion 121s and the upper protruding portion 125s from being exposed to the outside. This makes it easier to handle the battery cell during processing, and also more effectively prevents foreign matters such as moisture from penetrating into the interior of the battery cell 100 from the outside.

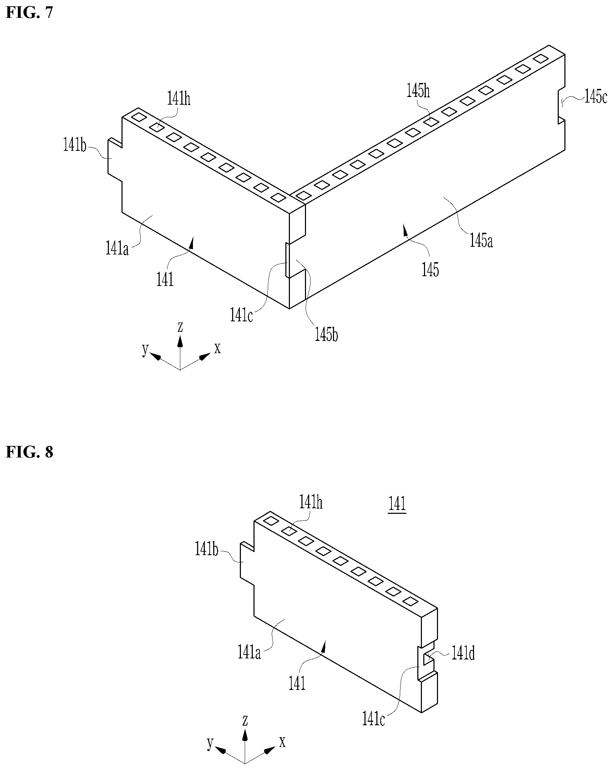

FIG. 6 is a top view of the battery cell of FIG. 1. FIG. 7 is a diagram showing an exterior member included in the battery cell of FIG. 1, showing a state in which a first exterior member and a second exterior member are coupled to each other. FIGS. 8 to 10 are perspective views showing the first exterior member of FIG. 7.

Referring to FIGS. 1, 6 and 7, in the battery cell 100 according to the present embodiment, the exterior member 140 may comprise: a pair of first exterior members 141 each covering both side surfaces of the electrode laminate 110 on the basis of the laminating direction of the electrode laminate 220, and a pair of second exterior members 145 each covering the front and rear surfaces of the electrode laminate 110 on the basis of the laminating direction of the electrode laminate 110.

Here, the pair of first exterior members 141 and the pair of second exterior members 145 may be coupled to each other. As an example, as shown in FIG. 6, one end of one first exterior member 141 among the pair of first exterior members 141 may be coupled to the other end of one second exterior member 145 among the pair of second exterior members 145. Further, one end of one second exterior member 145 among the pair of second exterior members 145 may be coupled to the other end of the other one first exterior member 141 among the pair of first exterior members 141. Further, one end of the other one first exterior member 141 among the pair of first exterior members 141 may be coupled to the other end of the other one second exterior members 145 among the pair of second exterior members 145. One end of the other one second exterior members 145 among the pair of the second exterior members 145 may be coupled to the other end of one first exterior member 141 among the pair of first exterior members 141.

Referring to FIG. 7, the pair of first exterior members 141 and the pair of second exterior members 145 may each include fitting portions 141b, 145b formed at one end and second accommodating grooves 141c, 145c formed at the other end, on the basis of the longitudinal direction. In this case, as described above, the fitting portion 145b of the first exterior member 145 may be fitted into the second accommodating groove 141c of the second exterior member 141. Further, although not shown in FIG. 7, the fitting portion 141b of the one first exterior member 141 may also be fitted into the second accommodating groove 145c of another second exterior member 145. Similarly, although not shown in FIG. 7, the fitting portion 145b of one second exterior member 145 may also be fitted into the second accommodating groove 141c of another first exterior member 141. Further, although not shown in FIG. 7, the fitting portion 141b of another first exterior member 141 may also be fitted into the second accommodating groove 145c of another second exterior member 145.

The following description will be made with reference to the first exterior member 141, but the same description can be applied to the second exterior member 145.

Referring to FIGS. 8 to 10, in the battery cell 100 according to the present embodiment, the first exterior member 141 may include a first main body portion 141a, a first fitting portion 141b, a first accommodating groove 141d, and a second accommodating groove 141c.

Here, the first fitting portion 141b is formed at one end of the first main body portion 141a, and may protrude outward from the first main body portion 141a. Further, the first accommodating groove 141d may be formed by being recessed or etched to a prescribed thickness onto the inner surface of the first main body portion 141a in contact with the accommodating portions 121p, 125p, and may extend along the longitudinal direction of the first body portion 141a. Further, the second accommodating groove 141c is formed at the other end of the first main body portion 141a, and may be formed by recessing or etching the other end of the first main body portion 141a to a prescribed thickness. In particular, the second accommodating groove 141c may have a size corresponding to that of the first fitting portion 141b.

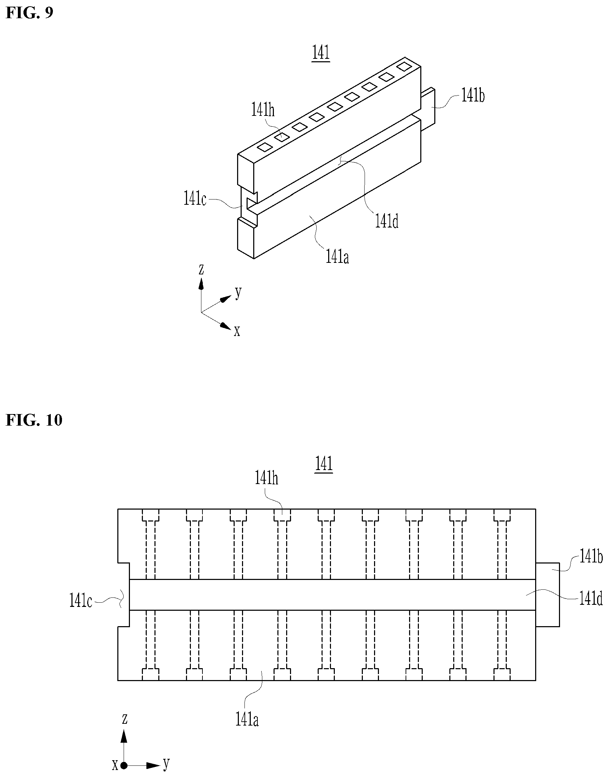

In addition, the first exterior member 141 may be formed at least one first through-hole 141h on the outer surface of the exterior member 141 into which a fixing member 150 may be inserted. Here, the first through-hole 141h may extend from the outer surface of the exterior member 141 to the first accommodating groove 141d. As an example, as shown in FIG. 10, the at least one through-hole 141h may include a plurality of pairs of through-holes 141h disposed on the same vertical line on the upper and lower surfaces of the exterior member 141, and the plurality of pairs of through-holes 141h may be disposed so as to be spaced apart from each other on the upper and lower surfaces of the exterior member 141.

As a result, the battery cell 100 according to the present embodiment has the advantage in that the first exterior member 141 and the second exterior member 145 are coupled relatively easily, and thus, the exterior member 140 can have a packaging structure that is easy to assemble and improves productivity.

A battery pack according to another embodiment of the present disclosure may include the battery cells described above. Meanwhile, the battery pack according to the present embodiment may be formed by directly packaging one or more of the battery cells described above inside a pack case, or by manufacturing the battery cells as battery modules and then packaging them inside the pack case.

The above-described battery pack can be applied to various devices. Such a device can be applied to a vehicle means such as an electric bicycle, an electric vehicle, or a hybrid vehicle, but the present disclosure is not limited thereto, and is applicable to various devices capable of using a battery pack, which also falls under the scope of the present disclosure

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100: battery cell
110: electrode laminate
115: electrolyte
120: battery case
130: buffer member
140: exterior member
150: fixing member

### [Industrial Applicability]

According to embodiments, the battery cell of the present disclosure and a battery pack including the same include a battery case made of a metal that accommodates an electrode laminate including bipolar electrodes, which offers the advantage that the battery case itself can function as an electrode tab.

In addition, the battery cell of the present disclosure and a battery pack including the same include a packaging structure formed of an exterior member attached along the outer peripheral surface of the battery case, which offers the advantage of applying pressure in the vertical direction to the electrode laminate and thus stably maintaining the contact between the components of the electrode laminate even during charge and discharge.

The effects of the present disclosure are not limited to the effects mentioned above, and additional other effects not described above will be clearly understood from the description of the appended drawings by those skilled in the art.

## Claims

1. A battery cell comprising:
an electrode laminate formed by laminating a plurality of bipolar electrodes having a configuration in which a negative electrode active material layer and a positive electrode active material layer are respectively coated on both surface of a metal current collector;
a battery case that accommodates the electrode laminate; and
an exterior member that surrounds a protruding portion extending outward from an outer peripheral surface of the battery case,
wherein the exterior member presses the protruding portion in a thickness direction of the protruding portion.

2. The battery cell of claim 1,
wherein the battery case comprises:
a lower metal that is located on a lower surface of the electrode laminate, and surrounds a lower part of the electrode laminate, and
an upper metal that is located on an upper surface of the electrode laminate, and surrounds an upper part of the electrode laminate.

3. The battery cell of claim 2,
wherein the lower metal comprises a lower accommodating portion that accommodates the electrode laminate, and a lower protruding portion that protrudes toward the outside of the battery case from the outer peripheral surface of the lower accommodating portion,
the upper metal comprises an upper accommodating portion that accommodates the electrode laminate, and an upper protruding portion that protrudes toward the outside of the battery case from the outer peripheral surface of the upper accommodating portion, and
the protruding portion is a portion where the lower protruding portion and the upper protruding portion face each other.

4. The battery cell of claim 3,
wherein the portions where the upper protruding portion and the lower protruding portion face each other are sealed.

5. The battery cell of claim 3,
further comprising a buffer member that extends along the lower protruding portion and the upper protruding portion.

6. The battery cell of claim 1,
wherein the exterior member is formed with a first accommodating groove that extends along the longitudinal direction of the protruding portion, and
the protruding portion is fitted into the first accommodating groove of the exterior member.

7. The battery cell of claim 1,
comprising at least one fixing member that fixes the exterior member and the protruding portion to each other,
wherein the fixing member extends from the exterior member to the protruding portion.

8. The battery cell of claim 7,
wherein the at least one fixing member comprises a pair of fixing members that extend from the upper and lower surfaces of the exterior member to the protruding portion, and
the at least one fixing member comprises a plurality of pairs of fixing members, and
the plurality of pairs of fixing members are disposed so as to be spaced apart from each other along the upper and lower surfaces of the exterior member.

9. The battery cell of claim 8,
wherein in the pair of fixing members, one fixing member has a relatively smaller fastening torque than the other fixing member.

10. The battery cell of claim 7,
wherein the exterior member is formed with at least one through hole into which a fixing member can be inserted in the exterior member.

11. The battery cell of claim 1,
wherein the exterior member comprises:
a pair of first exterior members each covering both side surfaces of the electrode laminate on the basis of the laminating direction of the electrode laminate, and
a pair of second exterior members each covering the front and rear surfaces of the electrode laminate on the basis of the laminating direction of the electrode laminate, and
the pair of first exterior members and the pair of second exterior members are coupled to each other.

12. The battery cell of claim 11,
wherein the pair of first exterior members and the pair of second exterior members each comprises a fitting portion formed at one end and a second accommodating groove formed at the other end, on the basis of the longitudinal direction, and
the fitting portion of the first exterior member is fitted into the second accommodating groove of the second exterior member, and
the fitting portion of the second exterior member is fitted into the second accommodating groove of the first exterior member.

13. The battery cell of claim 1,
wherein the electrode laminate is formed such that the bipolar electrodes and separators are laminated in sequence multiple times, and
further comprises an electrolyte that impregnates the electrode laminate inside the battery case.

14. The battery cell of claim 1,
wherein the electrode laminate is formed such that the bipolar electrode and the solid electrolyte are laminated in sequence multiple times.

15. The battery cell of claim 1,
wherein the electrode laminate further comprises a pair of single-sided negative electrodes and a single-sided positive electrode, each disposed at the outermost side on the basis of the laminating direction,
the single-sided negative electrode has a single-sided negative electrode active material layer formed on one surface of the negative electrode current collector, and
the single-sided positive electrode has a single-sided positive electrode active material layer formed on one surface of the positive electrode current collector.

16. The battery cell of claim 15,
wherein the separator is disposed between the single-sided negative electrode and single-sided positive electrode, and the bipolar electrode, respectively.

17. The battery cell of claim 15,
wherein the negative electrode current collector included in the single-sided negative electrode and the positive current collector included in the single-sided positive electrode each abut against the battery case.

18. A battery pack comprising the battery cell of claim 1.
